## Europäisches Patentamt
## European Patent Office
## Office européen des brevets

(19)

(11) Veröffentlichungsnummer: **0 164 599**
**B1**

(12) # EUROPÄISCHE PATENTSCHRIFT

(45) Veröffentlichungstag der Patentschrift:
01.03.89

(51) Int. Cl.⁴: **G 01 P 3/36**

(21) Anmeldenummer: 85105933.7

(22) Anmeldetag: 14.05.85

(54) Einrichtung zur Messung der Drehgeschwindigkeit.

(30) Priorität: 17.05.84 DE 3418288

(43) Veröffentlichungstag der Anmeldung:
18.12.85 Patentblatt 85/51

(45) Bekanntmachung des Hinweises auf die Patenterteilung:
01.03.89 Patentblatt 89/9

(84) Benannte Vertragsstaaten:
DE FR GB IT

(56) Entgegenhaltungen:
EP-A- 0 092 831
DE-A- 3 040 514
DE-A- 3 123 163
DE-A- 3 136 688
DE-A- 3 140 110

(73) Patentinhaber: **Standard Elektrik Lorenz Aktiengesellschaft, Lorenzstrasse 10, D-7000 Stuttgart 40 (DE)**

(84) Benannte Vertragsstaaten: **DE FR GB**

(73) Patentinhaber: **ALCATEL N.V., Strawinskylaan 537 (World Trade Center), NL-1077 XX Amsterdam (NL)**

(84) Benannte Vertragsstaaten: **IT**

(72) Erfinder: **Domann, Günter, Dr., Hölderlinplatz 6, D-7000 Stuttgart (DE)**

(74) Vertreter: **Schmidt, Werner, Dipl.-Phys. et al, Standard Elektrik Lorenz AG Patent- und Lizenzwesen Postfach 30 09 29, D-7000 Stuttgart 30 (DE)**

ACTORUM AG

## Beschreibung

Die Erfindung geht aus von einer Einrichtung zur Messung der Drehgeschwindigkeit wie im Oberbegriff des Anspruchs 1 angegeben. Eine entsprechende Einrichtung, bei der lediglich eine Phasenmodulation erfolgt, ist aus der DE-A1-30 40 514 bekannt. Aus der DE-A1-31 36 688 ist eine Einrichtung zur Messung der Drehgeschwindigkeit bekannt, bei der eine Frequenzmodulation erfolgt. Auch bei dieser Einrichtung werden zwei Teillichtstrahlen einander überlagert. Bei dieser Einrichtung enthält die Auswerteeinrichtung einen Bandpaß, mit dem das zur Auswertung verwendete Signal ausgefiltert wird.

Die Modulation – unabhängig davon, ob eine Phasen- oder eine Frequenzmodulation erfolgen soll – erfolgt häufig in einem Bauelement, das in der Technik der integrierten Optik realisiert ist. Das hierfür gebräuchliche Material (Li NbO$_3$) hat einen höheren Berechnungsindex (n $\approx$ 2,2) als das Material der spulenförmig angeordneten Lichtleitfaser (n = 1,47). Dies hat zur Folge; daß an der Stoßstelle zwischen dem Modulator und der Lichtleitfaser Reflexionen erfolgen. Solche Reflexionen finden unter anderem auch an der Stelle statt, an der das Licht in den Modulator eingekoppelt wird. Dadurch entstehen Signalanteile, die sich bei der Auswertung störend bemerkbar machen. Diese Störungen machen sich bei einer kurzen Kohärenzlänge des verwendeten Lichts kaum bemerkbar. Sie sind jedoch groß bei Licht mit großer Kohärenzlänge, welches für verschiedene Forderungen (z.B. bessere Frequenzstabilität) von Vorteil ist.

Bei der aus der DE-A1-31 23 163 bekannten Einrichtung ist an den beiden Enden des Lichtwegs jeweils ein optischer Phasenschieber angeordnet. Diese werden so angesteuert, daß eine scheinbare Drehung simuliert wird. Dadurch sollen die Auswirkungen von Lichtwegstreuungen an unerwünschten Reflexionsstellen weitestgehend ohne Einfluß bleiben auf die Auswertung der zu messenden Drehung.

Aufgabe der Erfindung ist es, eine weitere Einrichtung zur Messung der Drehgeschwindigkeit anzugeben, bei der ebenfalls die durch Reflexionen verursachten Störungen reduziert werden.

Die Lösung dieser Aufgabe erfolgt mit den im Anspruch 1 angegebenen Mitteln. Vorteilhafte Weiterbildungen sind den abhängigen Ansprüchen 2 bis 5 zu entnehmen.

Bei der neuen Lösung kann durch Reflexionen verursachte Störstrahlung gut von der Nutzstrahlung getrennt werden. Sie ist von besonderem Vorteil bei Realisierungen, bei denen sowohl aus Lichtleitfasern bestehende Wellenleiter als auch Wellenleiter, die in der Technik der integrierten Optik realisiert sind, verwendet werden. Es können Lichtquellen mit grossen Kohärenzlängen verwendet werden.

Die Erfindung wird anhand der Zeichnungen beispielsweise näher erläutert. Es zeigt

Fig. 1 eine schematische Darstellung einer Einrichtung zur Messung der Drehgeschwindigkeit mit einem Phasenmodulator, und

Fig. 2 und 3 schematische Darstellungen der Phasenmodulatoren.

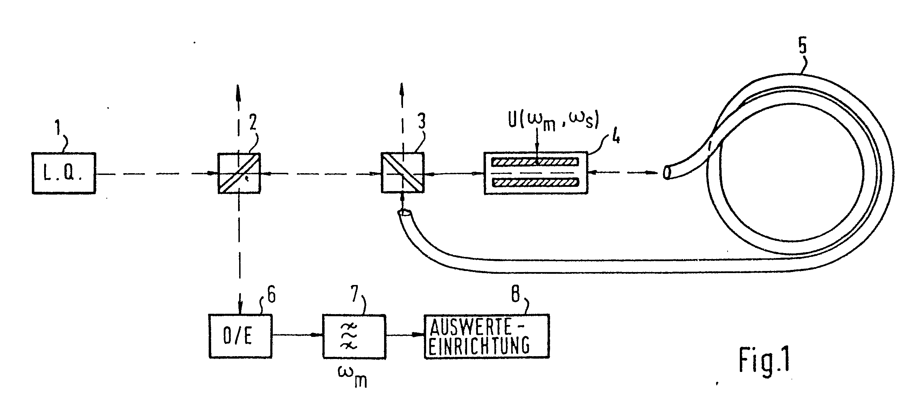

Anhand der Fig. 1 wird zunächst der Aufbau einer Einrichtung zur Messung der Drehgeschwindigkeit erläutert. Ein in einer Lichtquelle 1 erzeugter Lichtstrahl gelangt über einen ersten Strahlteiler 2 und einen zweiten Strahlteiler 3 zu einem Phasenmodulator 4. Der erste Strahlteiler 2 läßt die eine Hälfte des Lichtstrahls zu dem zweiten Strahlteiler 3 durch und lenkt den anderen Teil des auf ihn auftreffenden Lichtstrahls um 90° ab. Der um 90° abgelenkte Teilstrahl wird im nachfolgenden nicht weiter betrachtet. Der zweite Strahlteiler 3 läßt ebenfalls einen Teil des auf ihn auftreffenden Lichtstrahls durch und lenkt den anderen Teil um 90° ab. Der um 90° abgelenkte Teilstrahl wird in ein Ende eines Lichtwellenleiters 5 eingekoppelt. Der unverändert durchgelassene Teilstrahl gelangt zu dem Phasenmodulator 4, wird dort phasenmoduliert und wird danach in das andere Ende des Lichtwellenleiters 5 eingekoppelt. Der Lichtwellenleiter 5 ist eine spulenförmig angeordnete Lichtleitfaser. Meistens sind bei der spulenförmig angeordneten Lichtleitfaser mehrere Windungen vorhanden, die die Spule bilden. Dies ist jedoch nicht notwendig. Es genügt auch eine einzelne Windung, die eine Fläche umschließt. Die Form der umschlossenen Fläche ist hierbei ohne Bedeutung. Nach dem Durchlaufen der Lichtleitfaser 5 gelangt der eine Teilstrahl über den Phasenmodulator 4 zu dem Strahlteiler 3 und der andere Teilstrahl gelangt direkt zu dem Strahlteiler 3. Der Strahlteiler 3 wiederum läßt von den beiden Teilstrahlen jeweils einen Teil durch und lenkt den anderen um 90° ab. Zu dem ersten Strahlteiler 2 gelangt ein Lichtstrahl, der durch die Überlagerung von Anteilen der Teilstrahlen, die die Lichtleitfaser gegensinnig durchlaufen haben, entstanden ist. Die eine Hälfte dieses Lichtstrahls wird von dem ersten Strahlteiler 2 zu einem optisch/elektrischen Wandler 6 geleitet. Das elektrische Ausgangssignal des Wandlers 6 gelangt über einen Bandpaß 7 zu einer Auswerteeinrichtung 8. In der Auswerteeinrichtung 8 wird die Drehgeschwindigkeit ermittelt. Dies kann beispielsweise gemäß der Lösung, wie sie in der DE-OS 31 36 688 beschrieben ist, erfolgen. Deshalb wird auf die eigentliche Auswertung hier nicht mehr eingegangen.

Bei den bekannten Einrichtungen zur Messung der Drehgeschwindigkeit ist der Bandpaß 7 nicht vorhanden. In dem Phasenmodulator 4 erfolgt eine Modulation mit der Kreisfrequenz $\omega_m = 2\pi v_m$ ($v_m$ = Modulationsfrequenz). Dem Phasenmodulator 4 wird ein Ansteuersignal U zugeführt, das eine Funktion von $\omega_m$ ist.

Es ist möglich, zusätzlich zu dem einen Phasenmodulator, der dem einen Ende der Lichtleitfaser 5 vorgeschaltet ist, einen weiteren Phasenmodulator vorzusehen, der dann dem anderen Ende der Lichtleitfaser 5 vorgeschaltet ist.

Bei der neuen Einrichtung wird der Phasenmodulator nicht nur mit einer Frequenz $\omega_m$, sondern

mit zwei Frequenzen $\omega_m$ und $\omega_s$ angesteuert. Es ist möglich, die beiden Ansteuersignale zwei getrennten Phasenmodulatoren, die nacheinander angeordnet sind, zuzuführen oder beide Signale elektronisch zu überlagern und sie dann, als überlagertes Signal einem Modulator zuzuführen. Nachfolgend wird davon ausgegangen, daß die beiden Signale zunächst einander überlagert werden und dann dem Phasenmodulator 4 nur ein Modulationssignal, das die beiden Komponenten $\omega_m$ und $\omega_s$ enthält, zugeführt wird. Der bei der neuen Einrichtung verwendete Bandpaß 7 hat eine Mittenfrequenz $\omega_m$. Damit wird erreicht, daß zur Auswerteeinrichtung 8 nur Anteile mit dieser Frequenz $\omega_m$ gelangen und daß Signalanteile, die die Frequenz $\omega_s$ aufweisen, unterdrückt werden. Dies hat zur Folge, daß sich, wie weiter unten noch näher erläutert wird, die durch Reflexion verursachte Strahlung nicht mehr störend bemerkbar macht, weil sie mit der Frequenz $\omega_s$ moduliert ist. Anstelle der Auswerteeinrichtung 8 einen Bandpaß vorzuschalten, ist es auch möglich, die Auswerteeinrichtung 8 selbst so zu realisieren, daß nur Signale mit der Frequenz $\omega_m$ verarbeitet werden. Dies ist unter anderem der Fall, wenn bei der Auswertung ein Lock-In-Verstärker verwendet wird, dessen Zeitkonstante

$$\tau \gg \frac{1}{2\pi\nu_s}$$

ist.

Um die neue Lösung besser verstehen zu können, wird zunächst kurz das Konzept der Auswertung bei der bekannten Einrichtung erläutert. Bei der bekannten Einrichtung wird der Phasenmodulator 4 mit dem Signal

$$U = U_o \cdot \cos\omega_m \cdot t = U_o \cdot \cos 2\pi\nu_m \cdot t \sim \varphi_o$$
$$\cos 2\pi\nu_m \cdot t$$

angesteuert, mit
$U_o$ = Spitzenmodulationsspannung
$\omega_m$ = $2\pi\nu_m$ = Kreisfrequenz des zur Modulation verwendeten Ansteuersignals
$t$ = Zeit
$\varphi_o$ = Phasenhub.
Hierbei ist

$$\omega_m = \frac{\pi \cdot c}{n \cdot L} \text{ gewählt, mit}$$

$c$ = Lichtgeschwindigkeit im Vakuum
$n$ = Brechungsindex der Lichtleitfaser
$L$ = Länge der Lichtleitfaser.
Wird der Phasenmodulator mit dem Signal U angesteuert, wodurch eine Phasenmodulation mit der Frequenz $\omega_m$ erzeugt wird, dann erhält man am Ausgang des optisch/elektrischen Wandlers unter anderem ein Signal

$$i_D \sim \sin 2\Theta_s \cdot J_1 (2\varphi_o) \cdot \cos 2\pi\nu_m \cdot t + \text{const,}$$

mit
$\Theta_s$ = durch den Sagnac-Effekt bedingte Phasenverschiebung zwischen den Teilstrahlen, die die Lichtleitfaser gegensinnig durchlaufen,
$J_1(2\varphi_o)$ = Besselfunktion der 1. Art.

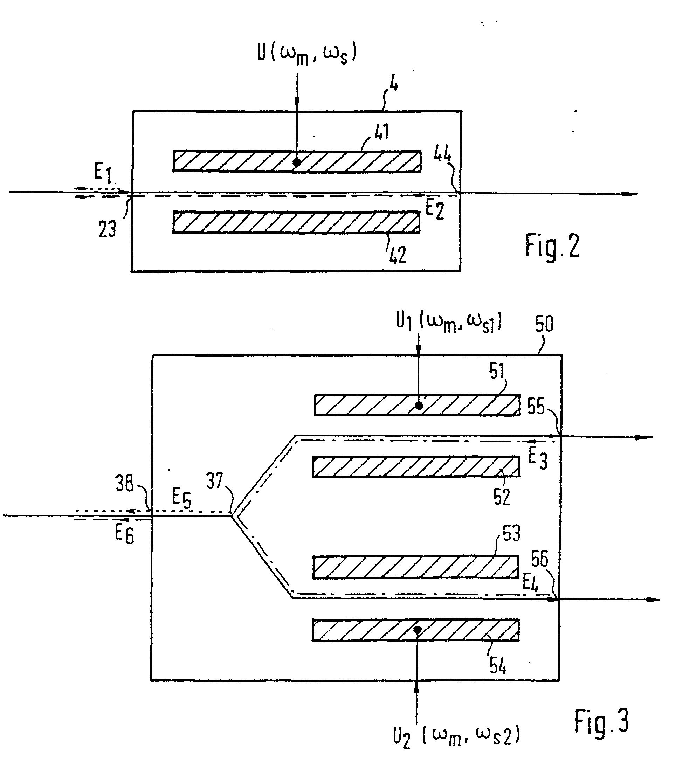

In der Fig. 2 ist der Phasenmodulator 4 dargestellt. Es handelt sich hierbei um einen bekannten elektrooptischen Modulator, der aus einem Substrat aus LiNbO$_3$, in dem ein Lichtwellenleiter realisiert ist, besteht, und auf dessen Oberfläche zwei Elektroden 41 und 42 vorgesehen sind. Der einen Elektrode wird das Ansteuersignal U zugeführt, das bei der bekannten Einrichtung eine Funktion von $\omega_m$ ist. Bei der neuen Einrichtung werden die Signale mit den Kreisfrequenzen $\omega_s$ und $\omega_m$ einander überlagert und dem Modulator wird dann ein Signal U ($\omega_m$, $\omega_s$) zugeführt. Es ist

$$U = U_o \cdot \cos \omega_m \cdot t + q \cdot U_o \cos \omega_s \cdot t.$$

(mit q als einer zu wählenden Größe; siehe weitere Beschreibung)

Wenn die beiden Signale dem Modulator getrennt zugeführt werden, dann werden die Elektroden 41 und 42 geteilt und es wird jeder Hälfte ein Signal zugeführt.

Von dem auf den Modulator auftreffenden Lichtstrahl wird an der Grenzfläche 23 bei Eintritt in den Modulator 4 ein Teil $E_1$ (punktiert dargestellt) in die Einfallsrichtung zurückreflektiert. Von dem durchgelassenen Lichtstrahl wird ein Teil $E_2$ (gestrichelt dargestellt) an der Grenzfläche 44 beim Austritt aus dem Modulator 4 zurückreflektiert. Dieser zurückreflektierte Strahl $E_2$ wird dem an der Grenzfläche 23 reflektierten Strahl $E_1$ überlagert. Bei der bekannten Lösung ist $E_2$ mit $\omega_m$ moduliert und $E_1$ ist unmoduliert. Somit ist das durch die Überlagerung von $E_1$ und $E_2$ erzeugte Signal ebenfalls mit $\omega_m$ moduliert. Es ist somit mit derselben Frequenz moduliert wie das auszuwertende Signal $i_D$ und kann deshalb nicht von dem Nutzsignal getrennt werden.

Im weiteren Verlauf wird vernachlässigt, daß $E_2$ mehrfach reflektiert werden kann. Qualitativ ändert sich an den folgenden Überlegungen durch diese Vereinfachung nichts.

Bei der neuen Einrichtung hingegen ist $E_2$ mit $\omega_m$ und $\omega_s$ moduliert. Der durch Überlagerung von $E_1$ und $E_2$ erzeugte Lichtstrahl enthält Anteile mit Frequenzen $x \cdot \omega_m \pm y \cdot \omega_s$ (x, y sind ganze Zahlen). Die Rechnung ergibt, daß nur noch ein Term mit $\omega_m$ vorhanden ist. Dieser kann, wie ebenfalls die Rechnung ergibt, durch geeignete Wahl von $q \cdot U_o$ zu null gemacht werden. Der Ausdruck mit $\omega_m$ wird null, wenn die Besselfunktion $J_o$ $(2\varphi_o \cdot q)$ = 0 ist, wobei $\varphi_o$ der der Ansteuerspannung $U_o$ entsprechende Phasenhub ist. Damit erreicht man, daß der durch die Überlagerung der durch Reflexionen entstandenen Strahlen $E_1$ und $E_2$ entstandene Lichtstrahl keine Anteile mit der Frequenz $\omega_m$ sondern nur noch Anteile mit $\omega_s$ oder Vielfache hiervon enthält. Die entsprechenden Signalanteile können bei der Auswertung leicht von dem Nutzsignal, das Anteile mit $\omega_m$ enthält, getrennt werden. Damit wird erreicht, daß sich das an den Grenzflächen reflektierte Licht bei der Auswertung nicht mehr störend bemerkbar macht.

Die Auswirkung der zusätzlichen Modulation mit der Kreisfrequenz $\omega_s$ auf die Auswertung ist vernachlässigt, wenn $\omega_s \ll \omega_m$ ist.

Mögliche Werte für eine Realisierung sind

$\varphi_o \cdot q = 1{,}2$
$\omega_m = 100\ \text{KHz}$
$\omega_s = 10\ \text{Hz}$

In der Fig. 3 ist ein Bauelement dargestellt, das in der Technik der integrierten Optik realisiert ist. In dem Substrat 50 des Bauelementes ist ein Wellenleiter mit einer y-förmigen Verzweigung vorgesehen. Weiterhin sind zwei Phasenmodulatoren vorhanden, die mit Ansteuersignalen $U_1$ und $U_2$ angesteuert werden. Der erste Phasenmodulator weist Elektroden 51 und 52 auf und der zweite Phasenmodulator weist Elektroden 53 und 54 auf. Ausgehend von der y-förmigen Verzweigung, die den Strahlteiler 3 (Fig. 1) funktionsmäßig ersetzt, verläuft zwischen den Elektrodenpaaren der Phasenmodulatoren jeweils ein Wellenleiter. Der Lichtstrahl, der in die beiden Teilstrahlen, die die spulenförmig angeordnete Lichtleitfaser gegensinnig durchlaufen, aufgeteilt wird, trifft von links auf das Bauelement 50 auf und die beiden Teilstrahlen verlassen das Bauelement 50 auf der rechten Seite. Der auf das Bauelement auftreffende Lichtstrahl und die beiden Teilstrahlen sind durch durchgezogene Linien dargestellt. An der linken Grenzfläche des Bauelements 50 wird ein Teil des Lichtstrahls reflektiert ($E_6$). Dieser reflektierte Lichtstrahl ist gestrichelt dargestellt. In dem Bauelement 50 wird an den Grenzflächen 55 und 56 jeweils ein Teil der beiden Teilstrahlen reflektiert ($E_3$, $E_4$). Diese reflektierten Strahlen sind strichpunktiert dargestellt. Die beiden strichpunktierten Strahlen überlagern sich an dem Verzweigungspunkt 37 der y-förmigen Verzweigung. Der durch die Überlagerung erzeugte Lichtstrahl $E_5$ ist punktiert dargestellt.

Weiterhin werden der punktiert dargestellte Lichtstrahl $E_5$ und der gestrichelt dargestellte Lichtstrahl $E_6$ einander überlagert. Auch hier enthält der Lichtstrahl, der durch die Überlagerung der Strahlen $E_5$ und $E_6$ erzeugt worden ist, Anteile mit der Frequenz $\omega_m$, die sich bei der Auswertung störend bemerkbar machen. Deshalb werden die beiden Phasenmodulatoren (ähnlich wie der Phasenmodulator nach Fig. 2) mit Signalen angesteuert, die nicht nur Signalanteile mit $\omega_m$ enthalten sondern außerdem noch einen Signalanteil mit $\omega_{s1}$ bzw. $\omega_{s2}$. Ohne Beschränkung der Allgemeinheit wird $\omega_{s1} = \omega_{s2} = \omega_s$ gesetzt. Die Ansteuersignale $U_1$ und $U_2$ für die beiden Phasenmodulatoren sind:

$U_1 = U_o \cos\omega_m \cdot t + q_1\, U_o \cos\omega_{s1} \cdot t$
$U_2 = U_o \cos\omega_m \cdot t - q_2\, U_o \cos\omega_{s2} \cdot t,$

wobei $q_1 = q_2$ sein kann.

Auch hier ist es wieder – analog zu den obigen Ausführungen – möglich, $q_1$ und $q_2$ so zu wählen, daß das durch die Überlagerung von $E_5$ und $E_6$ erzeugte Signal keine Anteile mit der Frequenz $\omega_m$, die sich bei der Auswertung störend bemerkbar machen, mehr enthält.

Der Anteil mit $\omega_m$ wird null, wenn $\varphi_o = 1{,}20$ ist. Mögliche Werte für eine Realisierung sind

$\omega_m = 100\ \text{KHz},\ \omega_s = 10\ \text{Hz}.$

## Patentansprüche

1. Einrichtung zur Messung der Drehgeschwindigkeit, bei der ein spulenförmig angeordneter Lichtwellenleiter (5) vorgesehen ist, der von zwei Lichtstrahlen in zueinander entgegengesetzten Richtungen durchlaufen werden kann, bei der mindestens eine Einrichtung (4) vorgesehen ist, durch die ein Lichtstrahl vor seinem Einkoppeln in den spulenförmig angeordneten Lichtwellenleiter mit einer ersten Frequenz ($\omega_m$) und einer weiteren Frequenz ($\omega_s$) phasen- oder frequenzmoduliert werden kann, und bei der in einer Auswerteeinrichtung (8) die durch den Sagnac-Effect bedingte Phasenverschiebung zwischen den beiden Lichtstrahlen nach dem Durchlaufen des Lichtwellenleiters auswertbar ist, dadurch gekennzeichnet, daß die weitere Frequenz so gewählt ist, daß die erste und die weitere Frequenz in der zu einer elektrischen Auswerteeinheit (7, 8) ausgebauten Auswerteeinrichtung (8) voneinander trennbar sind, und daß diese Auswerteeinheit Mittel (7) enthält, die es ermöglichen, daß zur Auswertung der Phasenverschiebung zur Messung oder Drehgeschwindigkeit nur Signalanteile, deren Frequenz gleich der ersten Frequenz ($\omega_m$) ist, auswertbar sind.

2. Einrichtung nach Anspruch 1, dadurch gekennzeichnet, daß das Signal für die Modulation mit der ersten Frequenz ($\omega_m$) und das Signal für die Modulation mit der weiteren Frequenz ($\omega_s$) einander überlagert sind und daß das so erzeugte Signal das Ansteuersignal für die mindestens eine Einrichtung (4) zur Phasen- oder Frequenzmodulation ist.

3. Einrichtung nach Anspruch 1, dadurch gekennzeichnet, daß die Einrichtung (4) zur Phasen- oder Frequenzmodulation zwei hintereinanderliegende Modulatoren enthält, die von dem Ansteuersignal mit der ersten Frequenz ($\omega_m$) bzw. dem Ansteuersignal mit der weiteren Frequenz ($\omega_s$) ansteuerbar sind.

4. Einrichtung nach Anspruch 1 oder 2, dadurch gekennzeichnet, daß, wenn jedem Ende des spulenförmig angeordneten Lichtwellenleiters (5) ein Modulator zugeordnet ist, der Phasenhub des Ansteuersignals für den einen Modulator entgegengesetzt gleich dem Phasenhub des Ansteuersignals für den anderen Modulator ist.

5. Einrichtung nach Anspruch 1, 2 oder 3, dadurch gekennzeichnet, daß die weitere Frequenz ($\omega_s$) wesentlich kleiner als die erste Frequenz ($\omega_m$) ist.

## Claims

1. Rotation rate measuring instrument comprising a coiled optical waveguide (5) which can be traversed by two light beams in opposite directions, at least one device (4) by which a light beam can be phase- or frequency-modulated at a first frequency ($\omega_m$) and an additional frequency ($\omega_s$) before being coupled into the coiled optical waveguide, and an evaluating device (8) in which the Sagnac phase difference between the two light

EP 0 164 599 B1

beams emerging from the optical waveguide can be evaluated, characterized in that the additional frequency is so chosen that the first frequency and the additional frequency are separable in the evaluating device (8), which is expanded into an electrical evaluating unit (7, 8), and that said evaluating unit includes means (7) which ensure that in the evaluation of the phase difference for measuring the rotation rate, only signal components having a frequency equal to the first frequency ($\omega_m$) can be evaluated.

2. An instrument as claimed in claim 1, characterized in that the signal for the modulation at the first frequency ($\omega_m$) and the signal for the modulation at the additional frequency ($\omega_s$) are combined, and that the signal thus produced is the drive signal for said at least one device (4) for phase or frequency modulation.

3. An instrument as claimed in claim 1, characterized in that the device (4) for phase or frequency modulation contains two series-connected modulators which can be driven by the drive signal having the first frequency ($\omega_m$) and the drive signal having the additional frequency ($\omega_s$), respectively.

4. An instrument as claimed in claim 1 or 2, characterized in that, if a modulator is associated with each end of the coiled optical waveguide (5), the phase deviation of the drive signal for one of the modulators is oppositely equal to the phase deviation of the drive signal for the other modulator.

5. An instrument as claimed in claim 1, 2 or 3, characterized in that the additional frequency ($\omega_s$) is substantially lower than the first frequency ($\omega_m$).

**Revendications**

1. Appareil de mesure de vitesse de rotation comportant un guide d'onde optique bobiné que deux faisceaux lumineux parcourent dans deux directions opposées, un dispositif (4) au moins, grâce auquel un des faisceaux lumineux au moins est modulé en fréquence ou en phase à une première fréquence ($\omega_m$) et à une autre fréquence ($\omega_s$), avant d'être couplé au guide d'onde optique bobiné, et un dispositif d'évaluation (8) grâce auquel est évaluée la différence de phase due à l'effet Sagnac, entre les deux faisceaux lumineux émergeant du guide d'onde optique, caractérisé en ce que ladite autre fréquence est choisie de sorte que le première fréquence et ladite autre fréquence soient séparables l'une de l'autre dans le dispositif d'évaluation (8) par un équipement d'évaluation électrique (7, 8) et en ce que ledit équipement d'évaluation comprend des moyens (7) grâce auxquels il est possible que, dans l'évaluation de la différence de phase pour la mesure de la vitesse de rotation, seules les composantes de signal ayant une fréquence égale à ladite première fréquence ($\omega_m$) sont évaluées.

2. Appareil conforme à la revendication 1, caractérisé en ce que le signal pour la modulation à la première fréquence ($\omega_m$) et le signal pour la modulation à la deuxième fréquence ($\omega_s$) sont combinés et en ce que le signal ainsi produit est le signal de commande d'un dispositif (4) au moins de modulation de phase ou de fréquence.

3. Appareil conforme à la revendication 1, caractérisé en ce que le dispositif (4) de modulation de phase ou de fréquence comprend deux modulateurs qui se suivent l'un l'autre et sont respectivement commandés par le signal de commande ayant ladite première fréquence ($\omega_m$) et le signal de commande ayant ladite autre fréquence ($\omega_s$).

4. Appareil conforme à la revendication 1 ou 2, caractérisé en ce que lorsqu'un modulateur est associé à chaque extrémité du guide d'onde optique bobiné, la déviation de phase du signal de modulation de l'un des modulateurs est opposée à la déviation de phase du signal de modulation de l'autre modulateur.

5. Appareil conforme à l'une des revendications 1, 2 ou 3, caractérisé en ce que ladite autre fréquence ($\omega_s$) ou les autres fréquences, sont sensiblement inférieures à ladite première fréquence ($\omega_m$).

Fig.1

EP 0 164 599 B1

$$U(\omega_m, \omega_s)$$

Fig.2

$$U_1(\omega_m, \omega_{s1})$$

$$U_2(\omega_m, \omega_{s2})$$

Fig.3